# EUROPÄISCHE PATENTANMELDUNG

(11) **EP 1 151 679 A1**
(43) Veröffentlichungstag der Anmeldung: **07.11.2001**
(21) Anmeldenummer: 01105231.3
(22) Anmeldetag: 03.03.2001
(51) Int. Cl.: A23N 12/08

(54) **Vorrichtung zum Rösten von Kaffeebohnen oder anderen kleinstückigen Produkten**

(30) Priorität: 06.05.2000 DE 20008189 U
(71) Anmelder: Neuhaus Neotec Maschinen- und Anlagenbau GmbH, 21465 Reinbek (DE)
(72) Erfinder: Die Erfindernennung liegt noch nicht vor
(74) Vertreter: Patentanwälte Hauck, Graalfs, Wehnert, Döring, Siemons

(57) **Zusammenfassung**

Vorrichtung zum Rösten von Kaffeebohnen oder anderen kleinstückigen Produkten mit
- einer ersten Kammer (1), die einen perforierten Boden (2) zum Durchleiten eines Gases und Erzeugen eines Wirbelbettes mit kleinstückigen Produkten oberhalb des Bodens (2) und einen Auslaß (13) an einem tiefen Punkt der ersten Kammer (1) zum Entlassen von kleinstückigen Produkten aus der ersten Kammer (1) aufweist,
- einer Vorrichtung zum Erzeugen eines heißen Gases (19,20) zum Vorkonditionieren der kleinstückigen Produkte, die an der Unterseite des perforierten Bodens (2) der ersten Kammer (1) angeschlossen ist, um dieser das Gas zuzuführen und die kleinstückigen Produkte in der ersten Kammer (1) im Wirbelbett vorzukonditionieren,
- einer zweiten Kammer (1'), die einen perforierten Boden (2') zum Durchleiten eines Gases und Erzeugen eines Wirbelbettes mit kleinstückigen Produkten oberhalb des perforierten Bodens (2') und einen an den Auslaß (13) der ersten Kammer (1) angeschlossenen Einlaß (9') für kleinstückige Produkte aus der ersten Kammer (1) aufweist, und
- einer Vorrichtung zum Erzeugen eines Röstgases (19',20') zum Rösten der kleinstückigen Produkte, die an die Unterseite des perforierten Bodens (2') der zweiten Kammer (1') angeschlossen ist, um dieser das Röstgas zuzuführen und die kleinstückigen Produkte in der zweiten Kammer (1') im Wirbelbett zu rösten.

## Beschreibung

Die Erfindung bezieht sich auf eine Vorrichtung zum Rösten von Kaffeebohnen oder anderen kleinstückigen Produkten, beispielsweise Kakao, Sesam oder Mohn.

Rohkaffee-Bohnen werden nach der Reinigung geröstet, wobei typischerweise Temperaturen des Röstgutes von etwa 100°C bis 250°C erreicht werden. Durch komplexe Maillard-Reaktionen entsteht das eigentliche Kaffee-Aroma. Während des Rostvorganges gehen andere tiefgreifende Änderungen vor sich, die äußerlich u. a. durch Volumenzunahme, Gewichtsminderung sowie Struktur- und Farbveränderungen gekennzeichnet sind. Das Röstergebnis hängt überdies von der Art der Wärmezufuhr und der Röstdauer ab. Heute werden meist Kaffeemischungen und weniger Einzelprovenienzen geröstet.

Die Röstung kann kontinuierlich oder diskontinuierlich erfolgen. Für die Chargenröstung werden insbesondere Trommel-Röster, Zentrifugal-Röster, Röster mit feststehendem Behälter und Fließbett- oder Wirbelbett-Röster eingesetzt. Entsprechendes gilt für das Rösten anderer kleinstückiger Produkte.

Beim Fließbett-Röster wird zur Intensivierung des Wärmeübergangs das Röstgut von einem Röstgas umspült, in der Schwebe gehalten und durchmischt. Beim Rotations-Fließbett-Röster erzeugt das Röstgas ein Rotations-Wirbelbett. Hierfür tritt das Röstgas durch einen perforierten Boden in eine Röstkammer und bildet dort mit dem Röstgut eine rotierende Wirbelschicht, deren Ausbildung durch die Ausgestaltung der Kammerwand unterstützt werden kann.

In der DE 34 37 432 C2 ist ein Kleinportionen-Kaffeeröster für Chargenbetrieb mit einer Röstkammer dargestellt, die hinsichtlich der Ausbildung des Rotations-Wirbelbettes und der Aussonderung unerwünschter Anteile der Charge optimiert ist. In der DE 31 16 723 ist eine mit geringem Energieverbrauch und kurzen Röstpausen auskommende Röstanlage beschrieben, in die eine solche Röstkammer integriert sein kann. In der DE 298 13 928 U1 ist ein Rotations-Fließbettröster dargestellt, der durch eine spezielle Kammergestaltung die Wärmebehandlung größerer Chargen auch über eine längere Dauer begünstigt.

Wirbelbettröster liefern im Vergleich zu herkömmlichen Röstern einen gleichmäßigeren Röstkaffee mit besserer Röstqualität. Dennoch ist es wünschenswert, die Gleichmäßigkeit und Qualität der Röstung weiter zu verbessern.

Davon ausgehend liegt der Erfindung die Aufgabe zugrunde, eine Vorrichtung zum Rösten zur Verfügung zu stellen, die Kaffeebohnen oder andere kleinstückige Produkte gleichmäßiger und mit verbesserter Qualität röstet.

Die Aufgabe wird durch eine Vorrichtung mit den Merkmalen des Anspruchs 1 gelöst. Vorteilhafte Ausgestaltungen der Vorrichtung sind in den Unteransprüchen angegeben.

Die erfindungsgemäße Vorrichtung zum Rösten von Kaffeebohnen oder anderen kleinstückigen Produkten hat
- eine erste Kammer, die einen perforierten Boden zum Durchleiten eines Gases und Erzeugen eines Wirbelbettes mit kleinstückigen Produkten oberhalb des Bodens und einen Auslaß an einen tiefen Punkt der ersten Kammer zum Entlassen von kleinstückigen Produkten aus der ersten Kammer,
- eine Vorrichtung zum Erzeugen eines heißen Gases zum Vorkonditionieren der kleinstückigen Produkte, die an der Unterseite des perforierten Bodens der ersten Kammer angeschlossen ist, um dieser das Gas zuzuführen und die kleinstückigen Produkte in der ersten Kammer im Wirbelbett vorzukonditionieren,
- eine zweite Kammer, die einen perforierten Boden zum Durchleiten eines Gases und Erzeugen eines Wirbelbettes mit kleinstückigen Produkten oberhalb des perforierten Bodens und einen an den Auslaß der ersten Kammer angeschlossenen Einlaß für kleinstückige Produkte aus der ersten Kammer aufweist, und
- eine Vorrichtung zum Erzeugen eines Röstgases zum Rösten der kleinstückigen Produkte, die an die Unterseite des perforierten Bodens der zweiten Kammer angeschlossen ist, um dieser das Röstgas zuzuführen und die kleinstückigen Produkte in der zweiten Kammer im Wirbelbett zu rösten.

Die erfindungsgemäße Vorrichtung unterteilt somit den Röstvorgang in eine Vorkonditionierung und in ein abschließendes Rösten. Das Vorkonditionieren kann insbesondere eine Trocknung mittels eines heißen Gases sein. Die Durchführung der Röstung in zwei getrennten Stufen hat den Vorteil, daß jede Stufe unter optimierten Bedingungen durchgeführt werden kann und in verstärktem Maße erreicht werden kann, daß die gesamte Charge in der jeweiligen Stufe den angestrebten Endzustand erreicht. So ist in der ersten Stufe eine gleichmäßigere bzw. vollständigere Trockung der einzelnen Produkte möglich, beispielsweise ein vollständiger Entzug der Feuchtigkeit bis zum Kern von Kaffeebohnen. Hierdurch wird eine günstigere Ausgangslage für die anschließende Röstung in der nächsten Stufe geschaffen, die ebenfalls genauer bis zu dem gewünschten Ergebnis durchgeführt werden kann, insbesondere hinsichtlich des Aromas, der Dichte, der Struktur und der Farbe von Kaffeebohnen. Kleinstückige Produkte verschiedener Qualitätsstufen können durch das Vorkonditionieren und Rösten in verschiedenen Stufen vergleichmäßigt werden. Durch unterschiedliche Behandlung des Röstgutes in den beiden Stufen ist die Beeinflußbarkeit des Röstergebnisses verbessert. Spezielle Eigenschaften oder Effekte (Qualitäts- oder Aromabeeinflussung) der kleinstückigen Produkte können durch gezieltere Behandlung besser herausgeholt werden. Die Verluste durch Fehlröstung werden reduziert. Es resultiert ein gleichmäßigeres und qualitativ hochwertigeres Röstgut als bei herkömmlichen Röstvorrichtungen.

Zudem begünstigt die Zweistufigkeit lange Röstzeiten, die für die Produktion eines Röstkaffees hoher Dichte ("high density") ermöglicht. Für einen Kaffee hoher Dichte kann das Wasser gezielt langsamer herausgezogen werden, damit die Bohnen nicht so stark aufgebläht werden. Auch extrem kurze Röstzeiten werden durch die Durchführung der Röstung in zwei Stufen mit genau anpaßbaren Bedingungen begünstigt. Dabei ist eine schnelle Überführung des Röstgutes von der ersten Kammer in die zweite Kammer durch die schnelle Entleerbarkeit von Wirbelbett-Kammern gewährleistet. Die Vorrichtung begünstigt also auch die Herstellung von Rohkaffee mit geringer Dichte ("low density") mit besonders hoher Extraktausbeute ("high yield") aufgrund einer hohen Porosität. Dafür kann das Wasser sehr schnell entfernt werden, wodurch sich die Kaffeebohnen stark aufblähen.

Zudem wird durch die Aufteilung des Röstprozesses auf zwei Kammern eine Vorrichtung erhöhter Leistung zur Verfügung gestellt. Dabei kommt grundsätzlich auch ein zeitlich überlappendes Arbeiten der beiden Kammern in Betracht. Grundsätzlich ist die Vorrichtung mit zwei herkömmlichen Kammern von Wirbelbett-Röstern realisierbar. In einer solchen Kammer sind mangels Einbauten die Prozeßparameter ohnehin gut regelbar. Durch die Aufteilung des Röstprozesses auf zwei Kammern wird die Regelbarkeit weiter verbessert, was der Gleichmäßigkeit und Qualität des Produktes weiter zugute kommt. Die Röstung ist zudem mit erhöhter Sicherheit durchführbar, da die Größe der Charge in der jeweiligen Röstkammer vermindert ist.

Die Erfindung wird nachfolgend anhand der anliegenden Zeichnung erläutert, die ein Ausführungsbeispiel der Vorrichtung in einem schematischen Fließbild zeigt.

Bei der nachfolgenden Beschreibung sind verschiedene Elemente der Vorrichtung, die konstruktiv im wesentlichen übereinstimmen, sich jedoch durch die Abmessungen bzw. Betriebsparameter unterscheiden können, durch dieselben Bezugsziffern gekennzeichnet, wobei zur Unterscheidung die Bezugsziffer zu einem dieser Elemente angestrichen ist.

Die Vorrichtung hat eine erste Kammer 1 und eine zweite Kammer 1', die beide als Rotations-Wirbelbett-Kammern ausgeführt sind und deren Gestaltung etwa derjenigen gemäß DE 34 37 432 C3 entspricht. Die Wirbelkammern 1, 1' haben einen geneigten, perforierten Boden 2, 2'. Vom unteren Ende des Bodens 2, 2' erstreckt sich eine Seitenwand 3, 3' der Kammer vertikal nach oben, an deren oberen Ende eine bezüglich des Bodens 2, 2' konkave Umlenkwand 4, 4' angrenzt. Vom oberen Ende der Umlenkwand 4, 4' geht eine Seitenwand 5, 5' vertikal nach oben.

Vom oberen Ende des Bodens 2, 2' aus erstreckt sich eine von der Seitenwand 3, 3' weg geneigte Seitenwand 6, 6' nach oben. Vom oberen Ende der geneigten Seitenwand 6, 6' aus geht eine Seitenwand 7, 7' vertikal nach oben. Die Seitenwände 5 und 7 sowie 5' und 7' sind von einem Deckel 8 sowie 8' überbrückt. Vorn und hinten ist die Kammer 1, 1' durch zwei zur Zeichenebene parallele, weitere Seitenwände geschlossen, die nicht gezeigt sind.

In der Seitenwand 5 ist ein Einlaß 9 für Röstgut ausgebildet, der über ein Klappenventil 10 mit einem Vorratsbehälter 11 für Rohkaffee verbunden ist, der eine Beschickungsöffnung 12 aufweist. Die Kammer 1' hat einen Einlaß 9', der in der Seitenwand 7' mündet.

Die Kammern 1, 1' sind jeweils am tiefsten Punkt der Seitenwand 3, 3' mit einem Auslaß 13, 13' versehen, der als Klappenventil ausgeführt ist. Der Auslaß 13 der Kammer 1 ist mit dem Einlaß 9' der Kammer 1' verbunden. Vom Einlaß 9' zweigt ein Rand zu einem Behälter 14 für Ausschußmaterial ab, der über eine Klappe öffenbar ist.

Der Auslaß 13' ist über einen Kanal mit einem Kühler 15 verbunden, der wiederum einen Auslaß 16 in Form einer Klappe hat, der mit einem Einlaß 17 eines Röstgutbehälters 18 verbunden ist. Vom Einlaß 17 zweigt wiederum ein Kanal zu einem Ausschußbehälter 14' ab, der durch Öffnen einer Klappe mit Ausschußmaterial befüllbar ist.

Die Böden 2, 2' der Röstkammern 1, 1' werden mit Trockungsgas bzw. Röstgas aus einem Brenner 19, 19' und einem jeweils nachgeschalteten Heißluftgebläse 20, 20' beaufschlagt. Die Trockungsabgase bzw. Röstabgase werden durch den Deckel 8, 8' der jeweiligen Kammer 1, 1' abgezogen und zur Entfernung von mitgerissenen Feststoffteilchen jeweils durch einen Zyklon 21, 21' geleitet. Von dort werden sie wiederum dem Brenner 19, 19' zugeführt, wodurch jeweils ein geschlossener Gaskreislauf gegeben ist.

Die Kammern 1, 1' sind jeweils durch eine Bypassleitung 22, 22' umgehbar, wozu Ventileinrichtungen 23, 23' und 24, 24' in Form von Klappen zu schalten sind.

Von den Bypassleitungen 22, 22' zweigen über Klappenventile 25, 25' aufsteuerbare Zuführkanäle zu einer katalytischen Nachverbrennung 26 ab, die in eine Abzugsleitung 27 zur Umgebung mündet.

Auch der Kühler 15 ist über eine Gebläse 28 und ein Klappenventil 29 mit der Nachverbrennung 26 verbindbar. Über ein weiteres Klappenventil 30, das dem Gebläse 28 nachgeschaltet ist, ist er über einen Zyklon 31 mit einer weiteren Leitung 32 zur Umgebung verbindbar.

Auch soweit dies für die Leitung der Gase zwischen den vorerwähnten Komponenten der Vorrichtung nicht ausdrücklich erwähnt ist, sind dafür Kanäle vorhanden, beispielsweise zwischen dem Brenner 19, dem Heißluftgebläse 20 und der Kammer 1.

An die Umlenkungen 4, 4' und an den Kühler 15 sind zudem Wasseraufgaben 33, 33' und 34 für eine Wasserkühlung angeschlossen.

Diese Vorrichtung funktioniert wie folgt:

Der Rohkaffee wird aus dem Behälter 11 über die Ventileinrichtung 10 der Kammer 1 zugeführt. Dabei wird das Trockengas durch die Bypassleitung 22 geführt. Danach wird die Kammer 1 durch den Boden 2 mit Trocknungsgas beaufschlagt, wodurch der Rohkaffee in einem Rotations-Fließbett bewegt und getrocknet wird. Zum Ablassen der Charge aus der Kammer 1 wird das Trockungsgas energiesparend durch die Bypassleitung 22 an der Kammer 1 vorbeigeführt, so daß das getrocknete Produkt unter Schwerkrafteinfluß durch die geöffnete Klappe 13 und den Einlaß 9' in die Kammer 1' fällt. Dabei wird das Röstgas durch den Bypass 22' geleitet.

Sobald das Gut sich in der Kammer 1' befindet, wird der Röstgasstrom durch diese geleitet, wodurch sich ein Rotations-Wirbelbett ausbildet, in dem das Gut geröstet wird. Während dessen kann in der Kammer 1 bereits eine weitere Charge getrocknet werden.

Nach Abschluß des Röstvorgangs wird das Röstgas durch die Bypassleitung 22' an der Kammer 1 vorbei geleitet, und das geröstete Gut kann unter Schwerkrafteinfluß durch die Klappe 13' in den Kühler 15 für ein anschließendes Kühlen befördert werden.

Schließlich wird das fertige Produkt durch die Klappe 16 in den Vorratsbehälter 18 abgezogen.

Beim Trocknen, Rösten und Kühlen kann ggf. ein kühlender Wasserstrom über die Wasserausgaben 33, 33' und 34 zugegeben werden.

Die Trocknungs- und Röstgase werden im Kreislauf von dem Zyklon 21, 21' gereinigt.

Überschüssige Gase des Trocken- und Röstprozesses können nach Reinigung durch den katalytischen Nachverbrenner 26 an die Umgebung abgegeben werden, ebenso überschüssige Gase aus dem Kühler 15. Überdies ist es möglich, Gase aus dem Kühler 15 über den Zyklon 31 gereinigt der Umgebung zuzuführen.

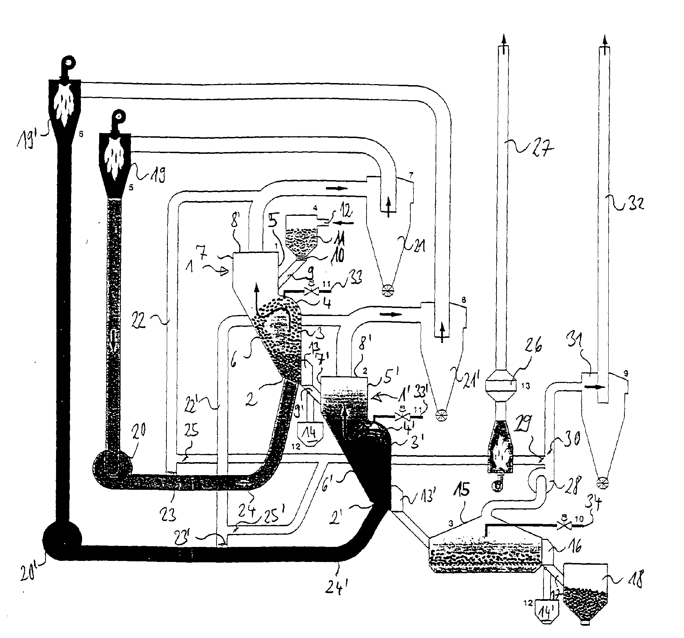

## Patentansprüche

1. Vorrichtung zum Rösten von Kaffeebohnen oder anderen kleinstückigen Produkten mit
- einer ersten Kammer (1), die einen perforierten Boden (2) zum Durchleiten eines Gases und Erzeugen eines Wirbelbettes mit kleinstückigen Produkten oberhalb des Bodens (2) und einen Auslaß (13) an einem tiefen Punkt der ersten Kammer (1) zum Entlassen von kleinstückigen Produkten aus der ersten Kammer (1) aufweist,
- einer Vorrichtung zum Erzeugen eines heißen Gases (19, 20) zum Vorkonditionieren der kleinstückigen Produkte, die an der Unterseite des perforierten Bodens (2) der ersten Kammer (1) angeschlossen ist, um dieser das Gas zuzuführen und die kleinstückigen Produkte in der ersten Kammer (1) im Wirbelbett vorzukonditionieren,
- einer zweiten Kammer (1'), die einen perforierten Boden (2') zum Durchleiten eines Gases und Erzeugen eines Wirbelbettes mit kleinstückigen Produkten oberhalb des perforierten Bodens (2') und einen an den Auslaß (13) der ersten Kammer (1) angeschlossenen Einlaß (9') für kleinstückige Produkte aus der ersten Kammer (1) aufweist, und
- einer Vorrichtung zum Erzeugen eines Röstgases (19', 20') zum Rösten der kleinstückigen Produkte, die an die Unterseite des perforierten Bodens (2') der zweiten Kammer (1') angeschlossen ist, um dieser das Röstgas zuzuführen und die kleinstückigen Produkte in der zweiten Kammer (1') im Wirbelbett zu rösten.

2. Vorrichtung nach Anspruch 1, bei der die erste Kammer (1) und/oder die zweite Kammer (1') einen geneigten perforierten Boden (2, 2') hat und sich der Auslaß (13) der ersten Kammer (1) am unteren Ende ihres perforierten Bodens (2) oder darunter und/oder der Einlaß der zweiten Kammer (1') am oberen Ende ihres perforierten Bodens (2') oder darüber befindet.

3. Vorrichtung nach Anspruch 2, bei der die erste Kammer (1) und/oder die zweite Kammer (1') angrenzend an das untere Ende ihres geneigten perforierten Bodens (2, 2') eine vertikale Seitenwand (3, 3') mit einer bezüglich des perforierten Bodens (2, 2') konkaven Umlenkwand (4, 4') am oberen Ende aufweist.

4. Vorrichtung nach Anspruch 3, bei der die erste Kammer (1) und/oder die zweite Kammer (1') angrenzend an das obere Ende ihrer Umlenkwand (4, 4') und angrenzend an das obere Ende ihres perforierten Bodens (2, 2') oder einer daran angrenzenden, geneigten Seitenwand (6, 6') nach oben gerichtete Seitenwände (7, 7') aufweist, die einen Sichtabschnitt begrenzen.

5. Vorrichtung nach einem der Ansprüche 1 bis 4, bei der die Vorrichtung zum Erzeugen des heißen Gases zum Vorkonditionieren (19, 20) und/oder die Vorrichtung zum Erzeugen des Röstgases (19', 20') mittels Ventileinrichtungen (23, 24, 23', 24') mit der ersten Kammer (1) und/oder der zweiten Kammer (1') verbindbar und von dieser trennbar ist.

6. Vorrichtung nach einem der Ansprüche 1 bis 5, bei der die Vorrichtung zum Erzeugen des heißen Gases zum Vorkonditionieren (19, 20) dieses Gas im Kreislauf durch die erste Kammer (1) führt und/oder die Vorrichtung zum Erzeugen des Röstgases (19', 20') dieses Gas im Kreislauf durch die zweite Kammer (1') führt.

7. Vorrichtung nach Anspruch 6, bei der die Vorrichtung zum Erzeugen des heißen Gases zum Vorkonditionieren (19, 20) einen Bypass (22) mit Ventileinrichtungen (23, 24) für eine zeitweilige Umgehung der ersten Kammer (1) aufweist und/oder bei der die Vorrichtung zum Erzeugen des Röstgases (19', 20') einen Bypass (22') mit Ventileinrichtungen (23', 24') zum zeitweiligen Umgehen der zweiten Kammer (1') aufweist.

8. Vorrichtung nach einem der Ansprüche 1 bis 7, bei der das Gas zum Vorkonditionieren von der ersten Kammer (1) in einen Zyklon (21) zum Entfernen von Verunreinigungen geführt ist und/oder bei der das Röstgas von der zweiten Kammer (1') in einen Zyklon (21') zum Entfernen von Verunreinigungen geführt ist.

9. Vorrichtung nach einem der Ansprüche 1 bis 8, bei der die erste Kammer (1) oberhalb des Auslasses (13) einen Einlaß (9) zum Zuführen von einstückigen Produkten in die erste Kammer (1) aufweist.

10. Vorrichtung nach einem der Ansprüche 1 bis 9, bei der die zweite Kammer (1') an einem tiefen Punkt einen Auslaß (13') zum Entlassen von kleinstückigen Produkten aus der zweiten Kammer (1') aufweist.

11. Vorrichtung nach einem der Ansprüche 1 bis 10, bei der an den Auslaß (13') der zweiten Kammer ein Kühler (15) für kleinstückige Produkte angeschlossen ist.

12. Vorrichtung nach einem der Ansprüche 1 bis 11, bei der an den Kreislauf für das Gas zum Vorkonditionieren und/oder den Kreislauf für das Röstgas und/oder an die Kühlvorrichtung (15) über Ventileinrichtungen (25, 25', 30) ein katalytischer Nachverbrenner (26) angeschlossen ist.

13. Vorrichtung nach Anspruch 12, bei der an die Kühlvorrichtung (15) über Ventileinrichtungen (30) ein Zyklon (31) angeschlossen ist, um das Gas aus dem Kühler (15) nach Abtrennung von Partikeln der Umgebung zuzuführen.

14. Vorrichtung nach einem der Ansprüche 1 bis 13, bei der die erste Kammer (1) und/oder die zweite Kammer (1') und/oder die Kühlvorrichtung (15) eine Wasseraufgabevorrichtung (33, 33', 34) aufweist.

15. Vorrichtung nach einem der Ansprüche 1 bis 14, bei der in der ersten Kammer (1) und/oder in der zweiten Kammer (1') durch eine Strömungsführung des Gases zum Vorkonditionieren und/oder des Röstgases entlang entsprechend konturierter Wände der jeweiligen Kammer (1, 1') eine Wirbelschicht mit Kaffeebohnen erzeugbar ist.
